# EUROPEAN PATENT APPLICATION

(11) **EP 0 858 044 A1**
(43) Date of publication of application: **12.08.1998**
(21) Application number: 97200378.4
(22) Date of filing: 10.02.1997
(51) Int. Cl.: G06F 17/60

(54) **Point-of-sales data processing system**

(71) Applicant: S.A. Etablissements Delhaize Frères et Cie Le Lion, 1080 Brussels (Molenbeek-Saint-Jean) (BE)
(72) Inventor: Koenot, Luc, 1080 Brussels (Molenbeek-saint-Jean) (BE)
(74) Representative: Quintelier, Claude

(57) **Abstract**

The present invention relates to a point-of-sales data processing system comprising a server and at least one terminal provided to communicate with each other, said data processing system comprising point generating means provided for generating fidelity points to be attributed to a customer. According to the invention the point generating means comprise action file generating means located within said server and executing means located within each of said terminals. The server further comprises downloading means connected to said action file generating means for downloading, to at least one of said terminals, an action file, to which a validity parameter is assigned. Each terminal comprises verifying means for verifying if a predetermined time criteria is within the validity parameter of the action file. The executing means are provided for enabling/disabling the cooperation with the downloaded action file, in function of the verification.

## Description

The present invention relates to a point-of-sales data processing system comprising a server and at least one terminal provided to communicate with each other, said data processing system comprising point generating means provided for generating fidelity points to be attributed to a customer.

Such a system is known and used for attributing to a customer a number of fidelity points in function of his purchases. The point generating means are located in the terminal and comprise an action. To the action, an algorithm is assigned defining in which manner points are attributed to the customer. Upon reading a fidelity card from the customer, the user of the terminal inputs a parameter, relative to what the customer has purchased, for example the number of litres fuel. This parameter is processed by the point generating means providing then the number of fidelity points to be attributed. This number of fidelity points is assigned to the card and stored in the terminal and a ticket, indicating the total number of points attributed to the card, is printed by the terminal.

In the known systems, the fidelity points are thus attributed in function of the action stored in the point generating means located in the terminal. The terminal can also be provided with a plurality of actions, each action having its specific algorithm for attributing fidelity points. Upon reading a card, the user chooses one of the actions in a menu.

The point generating means are provided in the terminal, which renders the system reliable. The drawback however is that modification of the actions can not be performed easily, which renders the system rather inflexible.

The object of the invention is to provide a data processing system enabling to generate actions in a more flexible manner and still having a reliable system.

To this object, the point-of-sales data processing system according to the invention is characterised in that
said point generating means comprise action file generating means located within said server and provided for generating an action file and for assigning to said action file a validity parameter indicating a time period during which said action file is considered valid;
said server comprising downloading means connected to said action file generating means and provided for downloading said action file to at least one of said terminals;
said point generating means further comprise executing means located within each of said terminals and provided for cooperating with said downloaded action file for said generation of fidelity points;
each of said terminals comprises initiating means provided for generating an initiating signal upon initiating the terminal;
said initiating means being connected to verifying means, said verifying means being provided for establishing, on the basis of the validity parameter within the downloaded action file and under control of said initiating signal, if a predetermined time criteria falls within, respectively outside said time period, and for generating an enable, respectively a disable signal upon establishing that said predetermined time criteria falls within, respectively outside said time period; and
said verifying means being connected to said executing means, said executing means being provided for enabling said cooperation of said executing means with said downloaded action file under control of said enable signal and for disabling said cooperation of said executing means with said action file under control of said disable signal.

By enabling to generate action files in said server and downloading them in said terminal, different or new action files can be generated in a flexible manner at the server side. By providing means for enabling/disabling the cooperation between the executing means and the action file in function of a validity parameter, a still reliable system is obtained.

According to a first preferred embodiment, said action file comprises at least one action and said action file generating means are provided for assigning to each action within said file a dedicated value for said validity parameter, each value indicating a time period during which the action to which said value is dedicated is considered valid and that said verifying means are provided for performing said establishment for each of said actions and for performing said generation of enable, respectively disable signals for each of said actions. This embodiment improves the flexibility of the system, since it is possible to attribute for each of the actions a different valid time period. The reliability of the system is also improved since the validity of each of the actions is verified.

According to a second preferred embodiment point-of-sales data processing system said action file generating means are provided for generating a series of action files and said downloading means are further provided for selecting for each of said terminals one of said action files. This embodiment enables to download, with the same point-of-sale data processing system, for each terminal a different action file.

The invention will now be described referring to the annexed drawings wherein :
Figure 1 illustrates schematically a point-of-sales data processing system according to a preferred embodiment of the invention;
Figure 2 illustrates a detail of the action file;
Figure 3 is a flowchart illustrating how to operate the terminal;
Figure 4 illustrates an example of an action;
Figure 5 illustrates an example of a message file; and
Figure 6 illustrates an example of a condition file.

Point-of-sales data processing systems are typically used in department stores, gas stations, ... and are provided for generating a number of fidelity points and attributing the generated fidelity points to a customer. For generating fidelity points, use is made of point generating means determining in which manner points must be attributed to the customer. For identifying the customer, use is for example made of a card or a tag provided with a bar-code, a magnetic stroke, a chip or the like. For this purpose, the terminal is then provided with reading means.

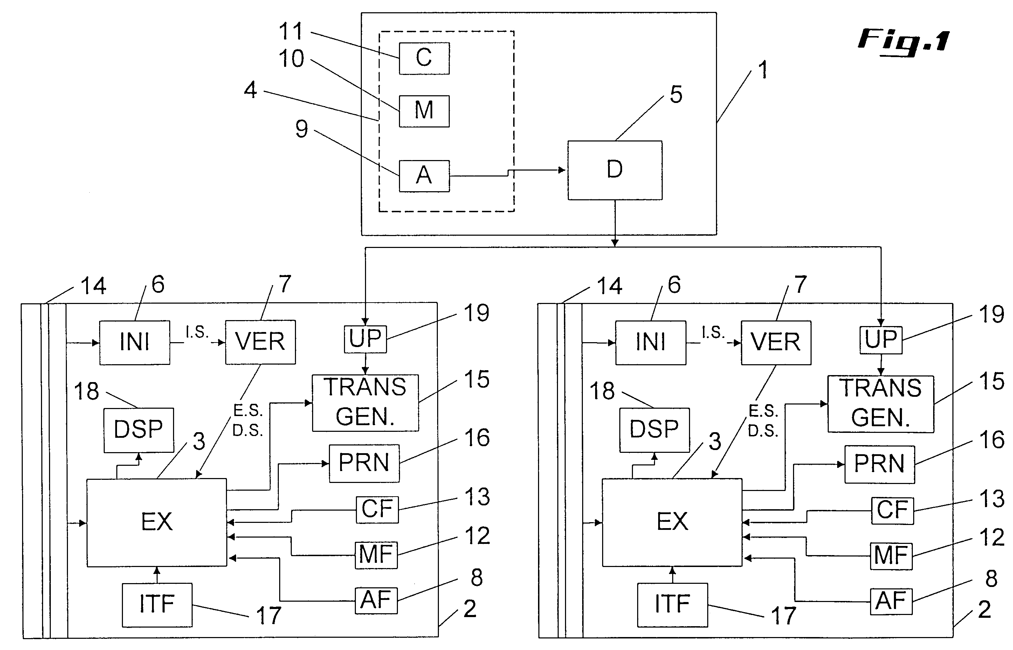

Figure 1 illustrates schematically a point-of-sales data processing system according to the invention. Such a system comprises a server 1 provided for communicating with at least one terminal 2. Each terminal is provided to be installed at the cashier's side of a store and the server at a central place in or remote from the store where the terminals are installed. According to a preferred embodiment comprising a plurality of terminals, the terminals are divided into groups of terminals, each group being installed in a corresponding store. In such an embodiment, the server is provided to be installed at a central site remote from the stores.

According to the invention, the point generating means 3,4 comprise executing means 3, which are located within each of the terminals 2, and action file generating means 9, located within the server. The action file generating means 9 comprise for example a user interface for generating an action file and a memory for storing the generated action file in the server. According to an alternative, the action files are provided to be directly downloaded to the terminal(s).

As illustrated in Figure 2, each action file 8 comprises at least one action (A₁-Aₙ). To each action, an algorithm (ALG₁-ALGₙ) is assigned defining in which manner points are attributed to a customer. According to the invention, the action file generating means 9 are provided for assigning a validity parameter (VAL) to the action file. Such a validity parameter indicates a time period during which at least one of the actions (A₁-Aₙ) within the action file 8 is considered valid.

The server 1 further comprises downloading means 5 connected to the action file generating means 9. Such downloading means are provided for downloading the generated action file 8 to one or several of the terminals 2. For achieving this downloading, communication systems which are known as such in computer network systems may be used.

According to the invention, the executing means 3 are provided for cooperating with the downloaded action file 8 in the terminal 2. This cooperation enables the executing means to have access to the action comprising the algorithm to be used, so that a number of fidelity points according to this algorithm can be generated.

Each of the terminals further comprises initiating means 6 which are provided for generating an initiating signal I.S. upon initiating the terminal. According to a preferred embodiment, the initiating means 6 are connected to code reading means 14 of the terminal 2. The code reading means 14 are provided for reading a code, e.g. provided on a card, the code being an identification of a customer. Upon reading or inserting a card, the initiating signal is generated by the initiating means. According to another embodiment, a switch or an equivalent terminal initiating means is connected to the initiating means for generating the initiating signal I.S. According to still another embodiment the initiating signal is generated under control of the downloading operation.

The initiating means 6 are connected to verifying means 7. This enables to supply the generated initiating signal I.S. to the verifying means 7. The verifying means 7 are provided for verifying the validity of the action file 8. This verifying operation is started under control of the initiating signal I.S. supplied by the initiating means 6. In this operation, there is established, on the basis of the validity parameter within the downloaded action file 8, if a predetermined time criteria falls within or outside the time period indicated by the validity parameter.

The predetermined time criteria is for example the actual time, but it could also be a fixed amount of time in addition to the actual time. The expression "time" is not limited to the hours and minutes, but it could also be a date, a week number, a month, ... or a combination of the preceding. The latter could be the case if the verifying operation is performed at least the fixed amount of time before the points should be generated. For example, an action has the following validity parameter : between 15/02/97 and 28/02/97. Suppose that the verifying operation is performed under control of the downloading operation and that the downloading operation is performed on 14/02/97 at 11 p.m. The actual time upon checking is thus 14/02/97 11 p.m. Points should be generated from 15/02/97 10 a.m. The fixed amount of time is then for example 8 hours, so that the predetermined time period is Saturday 15/02/97 7 am.

If it has been established that the predetermined time criteria falls within said time period, an enable signal E.S. is generated by the verifying means. If it has been established that the predetermined time criteria falls outside said time period, a disable signal D.S. is generated by the verifying means. In the example, it will be established that the action is valid. Since the verifying operation is only performed upon downloading and assuming for example that a downloading operation is performed every 24 hours, an enable signal could be generated for 24 hours.

The verifying means 7 are connected to the executing means 3. This enables to supply the enable/disable signals, generated by the verifying means, to the executing means. Under control of an enable signal, the executing means are provided for enabling the cooperation with the downloaded action file. Under control of a disable signal, the executing means are provided for disabling the cooperation with the downloaded action file. In this way, if the action file contains actions which are not valid any more or if no actions are present in the file, the cooperation will be disabled so that fidelity points can not be generated.

In a preferred embodiment, as illustrated in Figure 2, the validity parameter consists of a series of dedicated values (VAL₁ to VALₙ). Each of the values indicates, for at least one dedicated action, a time period during which the dedicated action(s) is (are) considered valid In this embodiment, the verifying means are then provided for performing the verifying operation for each of the actions present in the downloaded action file. The advantage of this embodiment is that each of the terminals can be loaded with an action file comprising several actions, wherein each action has its own validity assigned to and that only fidelity points can be generated with valid actions. Both the flexibility and the reliability of the system are thus improved.

According to another embodiment, the actions comprised in the action file have the same validity parameter so a dedicated value for each of the actions is not useful. In this case one value for the entire action file is used. A combination of values for each action and a value for the entire action file would also be conceivable.

The validity parameter, in particular the dedicated value, indicates a time period during which the action file, in particular the action(s), is (are) valid. Such a time period can for example be successive days within a period (for example 15/02/97 to 28/02/97), predetermined weekdays (for example every Monday, Thursday and Saturday), predetermined hours within a period (for example between 2 p.m. and 3 p.m. and between 10 p.m. and 11 p.m.), ... and also a combination of the preceding.

Preferably, as illustrated in Figure 2, the action file further comprises text parameters (TXT₁ to TXTₙ). The text parameters may comprise messages as such. These messages are provided to appear on a display provided in the terminal or on a ticket provided to the customer. According to an alternative, the text parameters comprises a series of codes corresponding to locations in a message file. Details about this file will be described further.

According to a preferred embodiment, the action file generating means 9 are provided for generating a series of action files. Preferably, these generating means comprises, as described hereinabove, a memory for storing the generated action files. Further, the downloading means 5 are provided for selecting for each of the terminals one of said action files. This can for example be achieved by providing for each of the terminals a dedicated terminal identification code. This code is entered e.g. by a user interface provided in the server for performing a communication between the server and the terminal to which the code is dedicated. This preferred embodiment enables to download for each of the terminals or possibly for each group of terminals a different action file. This means also that, with the same data processing system, several types of stores, e.g. restaurants, gas stations, department stores, can have a group of terminals, wherein action files for each group of terminal is different.

Preferably, each of the terminals 2 comprises transaction file generating means 11 connected to the executing means 3. The transaction file generating means are provided for generating transaction codes upon generating the fidelity points and storing the generated transaction codes in a transaction file. The transaction codes indicate i.a. a number of points attributed to the customer. Each of the terminals further comprises uploading means 19 connected to the transaction means and provided for uploading the generated transaction file into the server 1. Such as for the downloading means 5, communication systems known as such in computer networks may be used in the terminal for performing the uploading operation. According to an alternative, the generated fidelity points are not uploaded to the server but are recorded in a chip provided on a card of the customer. A combination of both, i.e. uploading into the server and recording on a chip is also conceivable.

The downloading operation is preferably activated at the server side, whereas the uploading operation could be performed either at the server side, or at the terminal side. This means that the uploading and downloading operation can be performed during one and the same communication operation or separately. Both uploading and downloading operation can be performed automatically at a predetermined time, e.g. every day at 11 p.m., when the store is closed.

According to a preferred embodiment, the point generating means further comprises message generating means 10 located in the server 1. These message generating means 10 are provided for generating a message file. Such a message file comprises at least one message provided to be output by the terminal, e.g. supplied to the customer on a ticket printed by printer 16 or to a display 18 provided in the terminal 2 or alternatively to a voice module (not shown). The message file 12 is provided for cooperating with the executing means.

Preferably, the point generating means further comprises condition generating means 11 generating means 11 located in the server 1. These condition generating means 10 are provided for generating a condition file. Such a condition file comprises at least one condition, wherein to each condition at least one of the messages of the message file is assigned. The condition file 13 is provided for cooperating with the executing means. These condition generating means enable to select messages in the message file in function of the condition. A condition could for example be the number of points generated for the customer, or the status of the client as explained hereunder. Both the message and the condition generating means enable to generate messages in a flexible manner.

Such as for the action file generating means, the message and/or condition generating means could be provided for generating several message/condition files and the downloading means could be provided for selecting for each terminal one of said message/condition files.

According to a preferred embodiment, the server further comprises executing file generating means and the downloading means are further provided for downloading the executing file into the executing means of terminals. This improves the flexibility of the executing means.

The described means provided in the terminals and the server can each time be embodied by a user interface cooperating with a microprocessor wherein specific functions are implemented. According to another embodiment, appropriate hardware components are used for performing specific functions.

It should be noted that the terminals could cooperate or could be integrated in a cash-register system of a store. It should also be noted that the described terminal could be provided with means for performing other applications, for example for performing payments by means of credit cards.

Optionally, at least a part of the actions could comprise a status parameter indicating a client status for which the action is valid. In this case, the identification operation of the client, e.g. performed by reading its fidelity card, also comprises the identification of its status, e.g. "normal", "good" or "excellent" client.

The operation of the point-of-sales data processing system according to the invention will now be illustrated referring to the flowcharts of Figure 3.

Figure 3 illustrates an example of the operation of one of the terminals 2 illustrated in Figure 1. There is started from the fact that the required files (action file, message file and condition file) are downloaded from the server into the terminal. Assume for example that the terminal is provided in a fast-food restaurant.

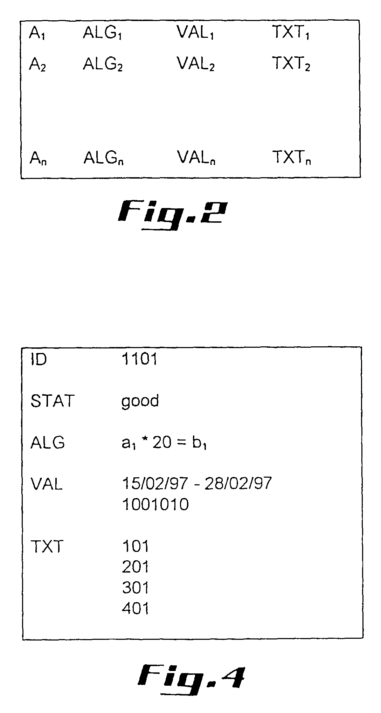

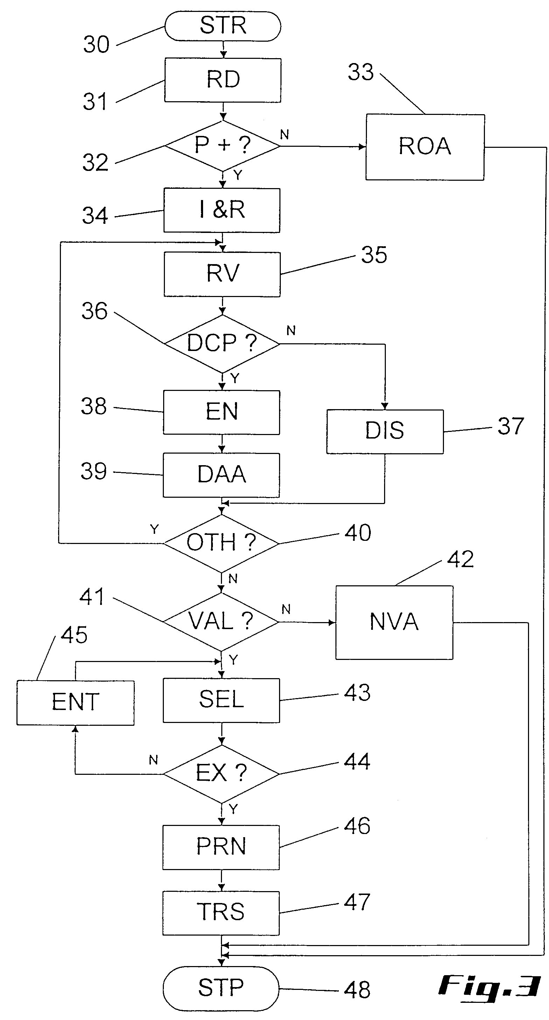

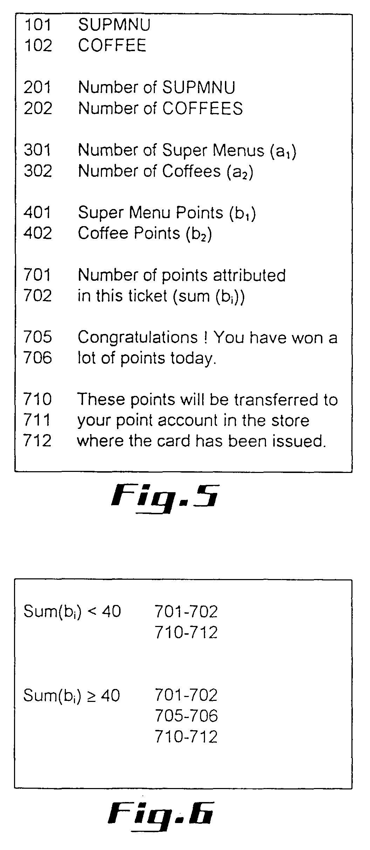

The action file comprises e.g. 3 actions : "SUPMNU", "COFFEE" and "ICE" providing respectively 20, 3 and 4 points per unit purchased. A detail of action "SUPMNU" is illustrated in Figure 4. This action comprises the following information : an identification number ID, a status parameter STAT indicating for which clients the action is valid, an algorithm ALG explaining that for each menu purchased, 20 points must be generated; a dedicated value VAL for the validity parameter indicating that the action is valid on Monday, Thursday and Saturday between 15/02/97 and 28/02/97. The action further comprises text codes TXT referring to messages in the message file, which is illustrated in Figure 5. An example of a condition file, provided for cooperating with the executing means is illustrated in Figure 6.

Similarly the action "COFFEE" is valid on every day between 15/02/97 and 15/04/97 and the action "ICE" is valid every Wednesday between 15/02/97 and 28/02/97.

Assume that a customer with status "good" client has bought 2 "Super Menus", 1 "Child Menu" and 3 coffees and that the actual time is Thursday 20/02/97.
- 30. STR :: The point generating procedure is started when a customer presents his fidelity card, comprising e.g. a bar-code for identifying the customer, to the operator of the terminal, further referred as the merchant.
- 31. RD :: The merchant introduces the card in the code reading means 14 of the terminal. The code identifying the customer is read by the reading means. Optionally, the status of the client, e.g. "normal", "good" or "excellent" client could be read from the card. This could for example be achieved by dedicating a first series of identification codes to "normal" clients, a second series to "good" clients and a third series to "excellent" clients. Alternatively, a card with a chip onto which the status of the client is indicated could be used.
- 32. P+? :: There is checked if the card presented by the customer is a authorised fidelity card to which fidelity points may be attributed, i.e. if it is a card which is still valid and which is dedicated to the executing means according to the invention.
- 33. ROA :: If the card is not an authorised fidelity card, but for example a credit card, the application corresponding to the card, e.g. credit payment with the credit card is performed, if the application is present in the terminal. If the card does not correspond to any application present in the terminal, it will be rejected.
- 34. I&R :: If the card is a fidelity card, the initiating means 6 generate an initiating signal I.S. which is supplied to the verifying means 7. The verifying means read under control of the initiating signal I.S. the actual time of the terminal. The predetermined time criteria is defined as explained hereinabove, e.g. Wed 19/02/97.
- 35. RV :: A dedicated value for one of the actions is read from the action file. In the example, the dedicated value of action "SUPMENU" is "15/02/97 - 28/02/97 1001010", wherein 1001010 indicate that the action is valid on Monday, Thursday and Saturday. Optionally, if the action comprise a status parameter, indicating a client status for which the action is valid, e.g. "good", this status parameter is read.
- 36. D⊂P?: The validity of the action is checked. For this purpose, there is checked if the dedicated value falls within the predetermined time criteria, e.g. Thursday 20/02/97 falls within the dedicated value of action "SUPMENU" and optionally if the status parameter corresponds to the status of the client. Similarly, the action "COFFEE" is found to be valid, but the action "ICE" invalid.
- 37. DIS :: Since the dedicated value does not fall within the predetermined time criteria, a disable signal is generated by the verifying means.
- 38. EN :: Since the dedicated value falls within the predetermined time criteria, an enable signal is generated by the verifying means.
- 39. DAA :: The display 18 shows the valid action, e.g. "SUPMNU". "SUPMNU" is shown on the display, since the action comprises text code 101 (Figure 4) referring to "SUPMNU" in the message file (Figure 5).
- 40. OTH?: There is checked if a non verified action is still present within the action file.
- 41. VAL?: There is checked if at least one valid action has been found in the action file.
- 42. NVA :: If no valid actions are present, a message, indicating the absence of valid actions, appears on the display 18 of the terminal. According to another embodiment, the display remains blank indicating that there are no valid actions in the action file.
- 43. SEL :: The merchant selects either one of the actions shown by the display, e.g. "SUPMNU" or "COFFEE" or selects an "exit" function if no further points must be generated. This selection can be performed by entering a dedicated function key provided on a user interface 17 of the terminal.
- 44. EX?: There is checked if the merchant has selected the "exit" function.
- 45. ENT :: The terminal requests for a number of items or a value, e.g. "Number of SUPMNU". This message is retrieved from the message file in the same manner as "SUPMENU". The merchant inputs a parameter, relative to what the customer has purchased, by means of the user interface 17, e.g. "2". The executing means process the entered parameter and calculates the number of points to be attributed by cooperating with the selected action. In this case 40 points are attributed. When the merchant selects action "COFFEE" in 38. SEL, the terminal requests "Number of COFFEES". The merchant inputs "3" and the executing means calculates that 9 points are attributed for this action. A total of 49 points are attributed.
- 46. PRN: After the merchant has selected the "exit" function, the terminal printer 16 prints a ticket. This printing is based on corresponding messages in the message file (Figure 5) and the messages are optionally selected in function of the condition met in the condition file (Figure 6). From the message file, the following messages are retrieved : "Number of Super Menus", "Super Menu Points", "Number of coffees" and "Coffee Points". Adjacent each of the messages respective values are printed, e.g. "2", "40", "3" and "9". Since the customer has collected 49 points, it falls under the condition : Sum(bᵢ) ≥ 40. The messages corresponding to the codes 701-702, 705-706 and 710-712 are retrieved form the message file : "Number of Points attributed in this ticket", "Congratulations ! You have won a lot of points today." and "These points will be transferred to your points account in the store where the card has been issued". Adjacent the first message value "49" is printed. If the card is provided with a chip wherein the total number of points on the account of the customer can be stored, an additional message can be printed, e.g. "Total number of Points at your account", the value to be printed adjacent this message being calculated by the executing means on the basis of the number of points stored in the chip of the card and the points generated in the ticket.
- 47. TRS :: The executing means generate transaction codes in a transaction file. These transaction codes comprise for example the following information : identification number of the card, date, hour, number of points attributed. This transaction file is provided to be uploaded to the server 1.
- 48. STP :: The point generating procedure is terminated.

## Claims

1. A point-of-sales data processing system comprising a server and at least one terminal provided to communicate with each other, said data processing system comprising point generating means provided for generating fidelity points to be attributed to a customer, characterised in that :
said point generating means comprise action file generating means located within said server and provided for generating an action file and for assigning to said action file a validity parameter indicating a time period during which said action file is considered valid;
said server comprising downloading means connected to said action file generating means and provided for downloading said action file to at least one of said terminals;
said point generating means further comprise executing means located within each of said terminals and provided for cooperating with said downloaded action file for said generation of fidelity points;
each of said terminals comprises initiating means provided for generating an initiating signal upon initiating the terminal;
said initiating means being connected to verifying means, said verifying means being provided for establishing, on the basis of the validity parameter within the downloaded action file and under control of said initiating signal, if a predetermined time criteria falls within, respectively outside said time period, and for generating an enable, respectively a disable signal upon establishing that said predetermined time criteria falls within, respectively outside said time period; and
said verifying means being connected to said executing means, said executing means being provided for enabling said cooperation of said executing means with said downloaded action file under control of said enable signal and for disabling said cooperation of said executing means with said action file under control of said disable signal.

2. A point-of-sales data processing system according to claim 1, characterised in that said action file comprises at least one action and said action file generating means are provided for assigning to each action within said file a dedicated value for said validity parameter, each value indicating a time period during which the action to which said value is dedicated is considered valid and that said verifying means are provided for performing said establishment for each of said actions and for performing said generation of enable, respectively disable signals for each of said actions.

3. A point-of-sales data processing system according to claim 1 or 2 comprising a series of terminals, characterised in that said action file generating means are provided for generating a series of action files and said downloading means are further provided for selecting for each of said terminals one of said action files.

4. A point-of-sales data processing system according to any one of the preceding claims, characterised in that
each of said terminals comprises transaction file generating means connected to said executing means and provided for generating transaction codes upon generating said fidelity points and storing the generated transaction codes in a transaction file, said transaction codes indicating a number of points attributed to said customer, and
each of said terminals further comprises uploading means connected to said transaction means and provided for uploading said transaction file into said server.

5. A point-of-sales data processing system according to any one of the preceding claims, characterised in that
said point generating means further comprises message generating means located in said server, said message generating means being provided for generating a message file, which message file comprises at least one message provided to be output by the terminal, said message file being provided for cooperating with said executing means, and
said downloading means are further provided for downloading said message file into at least one of said terminals.

6. A point-of-sales data processing system according to claim 5 comprising a series of terminals, characterised in that said message generating means are provided for generating a series of message files and said downloading means are further provided for selecting for each of said terminals one of said message files.

7. A point-of-sales data processing system according to claim 5 or 6, characterised in that
said point generating means further comprises condition generating means located in said server, said condition generating means being provided for generating a condition file, which condition file comprises at least one condition, wherein to each condition at least one of said messages being assigned, said condition file being provided for cooperating with said executing means, and
said downloading means are further provided for downloading said condition file into at least one of said terminals.

8. A point-of-sales data processing system according to claim 9 comprising a series of terminals, characterised in that said condition generating means are provided for generating a series of condition files and said downloading means are further provided for selecting for each of said terminals one of said condition files.

9. A point-of-sales data processing system according to any one of the preceding claims wherein said terminal further comprises code reading means provided for reading a code, characterised in that said code reading means are connected to said initiating means and are provided for initiating said terminal upon reading said code.

10. A point-of-sales data processing system according to any one of the claims 1 to 8, characterised in that said server further comprises terminal initiating means provided for initiating said terminal.

11. A point-of-sales data processing system according to any one of the preceding claims, characterised in that said server further comprises executing file generating means and said downloading means are further provided for downloading the executing file into the executing means of terminals.
